# EUROPÄISCHE PATENTANMELDUNG

(11) **EP 4 446 785 A1**
(43) Veröffentlichungstag der Anmeldung: **16.10.2024**
(21) Anmeldenummer: 23167924.2
(22) Anmeldetag: 14.04.2023
(51) Int. Cl.: G01V 8/20, G01V 8/22

(54) **ANORDNUNG**

(71) Anmelder: Leuze electronic GmbH + Co. KG, 73277 Owen/Teck (DE)
(72) Erfinder: Tkach, Gennady, 81373 München (DE); Perchermeier, Dr., Julian, 80637 München (DE); Auer, Robert, 85540 Haar (DE); Heckmayr, Alexander, 86807 Buchloe (DE); Sillge, Ray, 80995 München (DE)
(74) Vertreter: Ruckh, Rainer Gerhard

(57) **Zusammenfassung**

Die Erfindung betrifft eine Anordnung mit einem Sicherheitsgerät (1). Das Sicherheitsgerät (1) weist Anschlussmittel zum Anschluss eines Ausgangsmoduls (2) auf. Das Ausgangsmodul (2) weist wenigstens ein Schaltelement (19, 19') und einen diesem zugeordneten Überwachungsbaustein (18, 18') auf. Der Überwachungsbaustein (18, 18') ist für eine Fehlerkontrolle des Schaltelements (19, 19') ausgebildet. Der Überwachungsbaustein (18, 18') ist zur Generierung einer Sicherheitsfunktion ausgebildet, die über das Schaltelement (19, 19') an eine externe Einheit ausgegeben wird.

## Beschreibung

Die Erfindung betrifft eine Anordnung mit einem Sicherheitsgerät.

Ein derartiges Sicherheitsgerät kann insbesondere in Form eines Sicherheitssensors ausgebildet sein.

Derartige Sicherheitssensoren dienen generell zur Erfassung von Objekten in einem Überwachungsbereich. Beispielsweise kann ein derartiger Sicherheitssensor als optischer Sensor, z.B. als Lichtvorhang ausgebildet sein.

Ein derartiger Lichtvorhang ist beispielsweise aus der DE 10 2008 050 943 A1 vorbekannt. Der Lichtvorhang dient zur Überwachung von Objekten in einem Überwachungsbereich. Insbesondere ist der Lichtvorhang als Sicherheits-Lichtvorhang ausgebildet, der im Bereich der Sicherheitstechnik zur Überwachung von Gefahrenbereichen eingesetzt wird. Der Lichtvorhang umfasst eine Anordnung von Sendern, die im Gehäuse einer Sendereinheit untergebracht sind. Weiterhin ist eine Anordnung von Empfängern vorgesehen, die in einem Gehäuse einer Empfängereinheit untergebracht sind. Die Sender- und Empfängereinheiten sind an gegenüberliegenden Rändern des Überwachungsbereichs angeordnet. Bei freiem Überwachungsbereich sind die von einem Sender emittierten Lichtstrahlen auf einen zugeordneten Empfänger geführt. Der Sender und der zugeordnete Empfänger bilden eine Strahlachse. Zur Objektdetektion werden in der Auswerteeinheit die Empfangssignale der Empfänger ausgewertet und in Abhängigkeit hiervon als Objektfeststellungssignal ein binäres Schaltsignal generiert, dessen Schaltzustände angeben, ob sich ein Objekt im Überwachungsbereich befindet oder nicht. Ein Objekteingriff liegt vor, wenn wenigstens eine Strahlachse durch ein Objekt unterbrochen ist.

Derartige Sicherheitssensoren werden typisch zur Gefahrenbereichsüberwachung an Anlagen eingesetzt. Wird mit dem Sicherheitssensor, insbesondere dem Lichtvorhang, ein Objekt im Überwachungsbereich detektiert, wird durch das entsprechende Schaltsignal eine Sicherheitsfunktion ausgelöst, die die Anlage in einen sicheren Zustand überführt, insbesondere still setzt.

Für einen Einsatz in sicherheitsrelevanten Applikationen muss der optische Sensor die hierfür geltenden normativen Anforderungen erfüllen, d.h. der optische Sensor muss ein gefordertes Sicherheitsniveau erfüllen und hierzu einen entsprechenden fehlersicheren Aufbau aufweisen.

Dies wird üblicherweise dadurch erreicht, dass die Auswerteeinheit des optischen Sensors zwei unabhängige Prozessoren aufweist, die sich zyklisch selbst und gegenseitig testen und überwachen.

Die die Auswerteeinheit bildenden Prozessoren steuern sichere Ausgänge des Sicherheitssensors an, über welche das Schaltsignal ausgegeben wird. Zudem erfolgt mit den Prozessoren eine Fehlerprüfung der sicheren Ausgänge.

Durch die direkte Ansteuerung der sicheren Ausgänge über die Auswerteeinheit sind die sicheren Ausgänge hinsichtlich ihrer Funktionalität, wie z.B. Echtzeitfähigkeit, Rechenleistung oder Ein-/Ausgangsstruktur, von der Auswerteeinheit abhängig und daher für unterschiedliche Sicherheitsgeräte, insbesondere Sicherheitssensoren, verschieden.

Der Erfindung liegt die Aufgabe zugrunde eine Anordnung der eingangs genannten Art bereitzustellen, welche flexibel in sicherheitstechnischen Applikationen eingesetzt werden kann.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Anordnung mit einem Sicherheitsgerät. Das Sicherheitsgerät weist Anschlussmittel zum Anschluss eines Ausgangsmoduls auf. Das Ausgangsmodul weist wenigstens ein Schaltelement und einen diesem zugeordneten Überwachungsbaustein auf. Der Überwachungsbaustein ist für eine Fehlerkontrolle des Schaltelements ausgebildet. Der Überwachungsbaustein ist zur Generierung einer Sicherheitsfunktion ausgebildet, die über das Schaltelement an eine externe Einheit ausgegeben wird.

Die Erfindung betrifft auch ein entsprechendes Verfahren.

Das Ausgangsmodul, das über eine insbesondere elektronische und mechanische Schnittstelle mit dem Sicherheitsgerät verbunden ist, bildet eine modulare Einheit, in der unabhängig vom Sicherheitsgerät das wenigstens eine Schaltelement als Ausgangselement von dem zugeordneten Überwachungsbaustein angesteuert, geprüft und getestet wird.

Das Design und die Funktionalität des Ausgangsmoduls mit seinem Schaltelement sind somit unabhängig vom Systemdesign des Sicherheitsgeräts, insbesondere dessen Rechnerstruktur, und insbesondere einer im Sicherheitsgerät integrierten Auswerteeinheit. Die Eigenschaften des Schaltelements des Ausgangsmoduls sind insbesondere unabhängig von der Echtzeitfähigkeit, der Rechenleistung und der Ein-/ Ausgabestruktur des Sicherheitsgeräts.

Bei Aufdecken eines Fehlers im Ausgangsmodul durch den Überwachungsbaustein kann dieser eine Fehlermeldung generieren und/oder das Ausgangsmodul mit dem Sicherheitsmodul in einen sicheren Zustand überführen.

Durch die Fehlerprüfung des Überwachungsbausteins bildet das Schaltelement einen sicheren, d.h. fehlersicheren Ausgang.

Ein weiterer wesentlicher Aspekt der Erfindung besteht darin, dass der Überwachungsbaustein des Ausgangsmoduls selbsttätig eine Sicherheitsfunktion generieren kann, die über das Schaltelement an eine externe Einheit ausgegeben wird. Die Generierung der Sicherheitsfunktionen erfolgt vorteilhaft abhängig von Ausgangssignalen des Sicherheitsgeräts, die dem Ausgangsmodul über die Schnittstelle zugeführt werden.

Die Ausgangssignale des Sicherheitsgeräts können selbst bereits die Sicherheitsfunktion umfassen, die dann im Ausgangsmodul geprüft und ausgegeben wird. Weiterhin kann die Generierung der Sicherheitsfunktion durch Bearbeitung der Ausgangssignale erfolgen, wie beispielsweise einer Filterung oder einer zeitlichen Integration oder einer logischen Verknüpfung mehrerer Ausgangssignale.

Ein weiterer wesentlicher Vorteil der Erfindung besteht darin, dass das Ausgangsmodul an unterschiedliche Sicherheitsgeräte angeschlossen werden kann, wodurch eine hohe Flexibilität und ein breiter Anwendungsbereich des Ausgangsmoduls gegeben ist.

Das Sicherheitsgerät kann prinzipiell von einer Sicherheitssteuerung gebildet sein, die in Abhängigkeit von Signalen von angeschlossenen Signalgebern Ausgangssignale generiert, die dem Ausgangsmodul zugeführt werden.

Besonders vorteilhaft ist das Sicherheitsgerät ein Sicherheitssensor. Ein derartiger Sicherheitssensor dient insbesondere zur Erfassung von Objekten in einem Überwachungsbereich und wird zur Gefahrenbereichsüberwachung an einer Anlage eingesetzt. Der Sicherheitssensor weist hierzu Sensorkomponenten zur Obj ekterfassung und eine Auswerteeinheit zur Auswertung von Sensorsignalen auf. Beispiele für derartige Sicherheitssensoren sind Lichtvorhänge oder Flächendistanzsensoren.

Mit einem derartigen Sicherheitssensor wird als Ausgangssignal ein Schaltsignal generiert, dessen Schaltzustände angeben, ob sich ein Objekt im Überwachungsbereich befindet oder nicht.

Ein Schaltsignal, das ein Objekt im Überwachungsbereich signalisiert, kann bereits zur Generierung der Sicherheitsfunktion dienen, beispielsweise um eine Stillsetzung, der überwachten Anlage zu bewirken.

Gemäß einer vorteilhaften Ausführungsform weist das Ausgangsmodul mehrere Schaltelemente auf, welchen jeweils ein Überwachungsbaustein zugeordnet ist.

Dadurch wird eine mehrkanalige Ausgangsstruktur gebildet, die eine erhöhte Fehlersicherheit bei der Generierung und Ausgabe der Sicherheitsfunktion gewährleistet.

Vorteilhaft sind die Überwachungsbausteine über wenigstens eine Leitung verbunden, über welche ein bidirektionaler Informationsaustausch erfolgt.

Durch den Informationsaustausch können Ergebnisse, die in den einzelnen Überwachungsbausteinen durch Auswertungen und Verarbeitungen von Signalen erhalten werden, miteinander verglichen und so gegengeprüft werden, wodurch Fehler in den Überwachungsbausteinen aufgedeckt werden können.

Der oder jeder Überwachungsbaustein ist generell von einer Rechnereinheit gebildet. Insbesondere ist der oder jeder Überwachungsbaustein ein Mikrocontroller oder eine CPU oder ein ASIC oder ein FPGA oder ein Mehrkernprozessor.

Gemäß einer ersten vorteilhaften Ausgestaltung ist das oder wenigstens ein Schaltelement als Halbleiterschaltelement ausgebildet.

Vorteilhaft werden zur Funktionsüberprüfung des Halbleiterschaltelements in dem Überwachungsbaustein Testimpulse generiert, an das Halbleiterschaltelement ausgegeben, von diesem rückgelesen und im Überwachungsbaustein mit einer Erwartungshaltung verglichen.

Dabei sind die Testimpulse so kurz, dass sie den Schaltzustand des Schaltelements nicht ändern, d.h. über das Schaltelement ausgegebene Ausgangssignale bleiben von den Testimpulsen unbeeinflusst.

Gemäß einer weiteren vorteilhaften Ausgestaltung ist das oder wenigstens ein Schaltelement als elektromechanisches Schaltelement ausgebildet.

In diesem Fall können in dem dem elektromechanischen Schaltelement zugeordneten Überwachungsbaustein Schaltzustände von Schaltkontakten des elektromechanischen Schaltelements überprüft werden.

Ein Beispiel für derartige elektromechanische Schaltelemente sind Relais mit zwangsgeführten Kontakten. Jedes Relais weist als zwangsgeführten Kontakt einen Öffner und Schließer auf. Bei fehlerfreiem Betrieb des Relais können der Öffner und Schließer niemals zur gleichen Zeit geschlossen sein. Dies kann mittels der Überwachungsbausteine geprüft werden, wodurch Fehlfunktionen derartiger Relais aufgedeckt werden können.

Prinzipiell können bei einer mehrkanaligen Ausgansstruktur des Ausgangsmoduls alle Schaltelemente als Halbleiterschaltelemente oder alle Schaltelemente als elektromechanische Schaltelemente ausgebildet sein.

Besonders vorteilhaft weist das Ausgangsmodul diversitäre Schaltelemente auf, wobei dann die Ausgangsstruktur sowohl elektromechanische Schaltelemente, als auch Halbleiterschaltelemente als Schaltelemente aufweist.

Damit werden Fehler infolge gemeinsamer Fehlerursachen von identischen Schaltelementen bauartbedingt ausgeschlossen.

Gemäß einer vorteilhaften Ausführungsform weist der oder jeder Überwachungsbaustein einen sicheren Eingang auf, der an das Sicherheitsgerät angeschlossen ist.

Dabei kann über den sicheren Eingang ein Ausgangssignal vom Sicherheitsgerät in das Ausgangsmodul eingelesen werden, welches den Zustand des oder jedes Schaltelements bestimmt.

Anhand der Ausgangssignale, die vom Sicherheitsgerät eingelesen werden, kann in dem Überwachungsbaustein oder den Überwachungsbausteinen die Sicherheitsfunktion generiert werden, die über die Schaltelemente ausgegeben wird.

Vorteilhaft wird der oder jeder sichere Eingang von einer Auswerteeinheit des Sicherheitsgeräts dynamisch angesteuert.

Dynamische Ansteuerung bedeutet hierbei, das am Eingang kein statisches Signal anliegt, sondern ein digitales Signal, dessen Bitwerte und damit dessen Signalzustände sich laufend ändern.

Vorteilhaft bildet der Eingang eine dynamische Datenschnittstelle aus, bzw. ist Bestandteil einer dynamischen Datenschnittstelle, über welche ein bidirektionaler Datenaustausch zwischen dem Sicherheitsgerät und dem Ausgangsmodul erfolgt. Beispiele für derartige dynamische Datenschnittstellen sind Bussysteme oder bidirektionale Punkt-zu-Punkt-Verbindung wie I/O Link.

Gemäß einer vorteilhaften Weiterbildung werden Zustandsinformationen des Ausgangsmoduls in das Sicherheitsgerät rückgelesen.

Vorteilhaft erfolgt das Rücklesen über die dynamische Datenschnittstelle.

Anhand der rückgelesenen Informationen von dem Ausgangsmodul kann in der Auswerteeinheit des Sicherheitsgeräts eine weitere Funktionsprüfung erfolgen.

Gemäß einer weiteren vorteilhaften Ausgestaltung der Erfindung ist die Auswerteeinheit des Sicherheitsgeräts über eine Steuerleitung mit dem oder jedem Schaltelement verbunden.

Dabei ist über eine Steuerleitung ein Schaltelement direkt von der Auswerteeinheit angesteuert.

Damit wird eine Bypass-Funktion derart ermöglicht, dass Ausgangssignale, insbesondere die Sicherheitsfunktionen, die über das Schaltelement oder die Schaltelemente ausgegeben werden, nicht in dem oder den Überwachungsbausteinen generiert werden, sondern direkt im Sicherheitsgerät.

Gemäß einer vorteilhaften Ausführungsform sind die Komponenten des Sicherheitsgeräts in einem Gerätegehäuse integriert. Die Komponenten des Ausgangsmoduls sind in einem Modulgehäuse integriert.

Damit bilden das Sicherheitsgerät und das Ausgangsmodul räumlich getrennte Einheiten, so dass eine einfache Kombination eines Ausgangsmoduls mit unterschiedlichen Sicherheitsgeräten ermöglicht wird.

Die Erfindung wird im Folgenden anhand der Zeichnungen erläutert. Es zeigen
- Figur 1:: Schematische Darstellung der erfindungsgemäßen Anordnung mit einem Sicherheitsgerät und einem Ausgangsmodul.
- Figur 2:: Erstes Ausführungsbeispiel eines Sicherheitsgeräts in Form eines Lichtvorhangs.
- Figur 3:: Zweites Ausführungsbeispiel eines Sicherheitsgeräts in Form eines Flächendistanzsensors.
- Figur 4:: Ausführungsbeispiel eines Ausgangsmoduls.

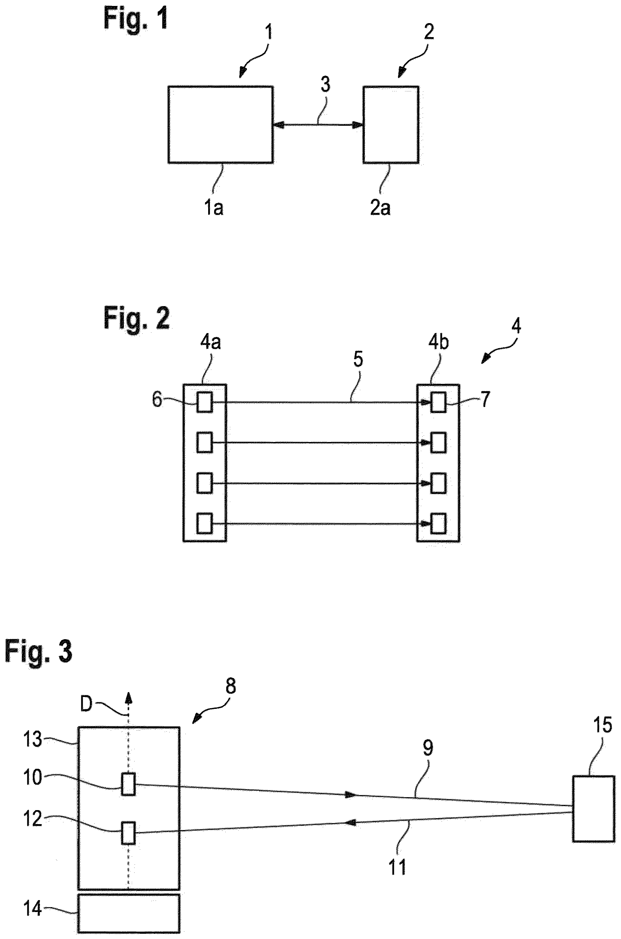

Figur 1 zeigt schematisch ein Ausführungsbeispiel der erfindungsgemäßen Anordnung mit einem Sicherheitsgerät 1 und einem Ausgangsmodul 2. Das Sicherheitsgerät 1 und das Ausgangsmodul 2 bilden separate Einheiten, die wie Figur 1 zeigt, über eine Schnittstelle 3 verbunden sind. Das Sicherheitsgerät 1 ist im vorliegenden Fall in einem Gerätegehäuse 1a untergebracht, das Ausgangsmodul 2 ist in einem Modulgehäuse 2a untergebracht.

Das Sicherheitsgerät 1 ist vorteilhaft von einem Sicherheitssensor gebildet, wobei die Figuren 2 und 3 Sensorkomponenten zweier Ausführungsbeispiele von Sicherheitssensoren zeigen.

Figur 2 zeigt schematisch die Sensorkomponenten eines Lichtvorhangs 4. Der Lichtvorhang 4 umfasst eine Reihenanordnung von Lichtstrahlen 5 emittierenden Sendern 6 in einem ersten Gehäuse 4a und eine Reihenanordnung von Lichtstrahlen 5 empfangenden Empfängern 7 in einem zweiten Gehäuse 4b. Die Gehäuse (4a, 4b) sind an gegenüberliegenden Rändern eines Überwachungsbereichs angeordnet. Bei freiem Überwachungsbereich treffen die Lichtstrahlen 5 der Sender 6 auf einen zugeordneten Empfänger 7, wie in Figur 2 dargestellt. Bei einem Objekteingriff im Überwachungsbereich werden die Lichtstrahlen 5 wenigstens eines Senders 6 unterbrochen.

Der Lichtvorhang 4 kann auch als Reflexions-Lichtvorhang ausgebildet sein. Dann sind alle Sender 6 und Empfänger 7 in einem gemeinsamen Gehäuse untergebracht, wobei dieses Gehäuse an einem Rand des Überwachungsbereichs angeordnet ist und am gegenüberliegenden Rand des Überwachungsbereichs ein Reflektor angeordnet ist.

Figur 3 zeigt die Sensorkomponenten eines Sicherheitssensors in Form eines Flächendistanzsensors 8. Der Flächendistanzsensor 8 weist einen Distanzsensor mit einem Sendelichtstrahlen 9 emittierenden Sendeelement 10 und einem Empfangslichtstrahlen 11 empfangenden Empfangselement 12 auf. Der Distanzsensor befindet sich in einem rotierenden Messkopf 13, der auf einem Sockel 14 um eine Drehachse D drehbar gelagert ist. Durch die Drehbewegung des Messkopfs 13 werden die Sendelichtstrahlen 9 periodisch in einem flächigen Überwachungsbereich geführt. Mit dem Distanzsensor erfolgt eine Distanzbestimmung von Objekten 15 im Überwachungsbereich, wobei die Distanzmessung nach einem Impuls-Laufzeit-Verfahren oder einem Phasenmessverfahren erfolgen kann.

Alternativ kann der Flächendistanzsensor 8 einen stationär in einem Gehäuse integrierten Distanzsensor aufweisen. Dann werden die Sendelichtstrahlen 9 mittels einer Ablenkeinheit periodisch im Überwachungsbereich geführt.

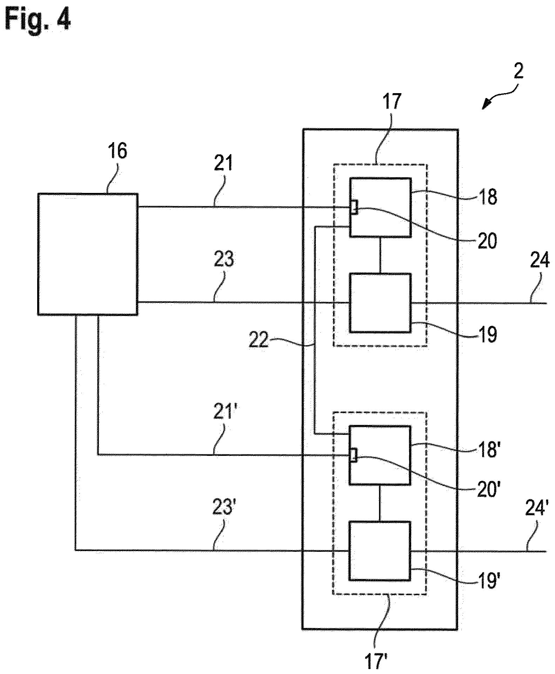

Figur 4 zeigt ein Ausführungsbeispiel des erfindungsgemäßen Ausgangsmoduls 2 mit einer zugeordneten Auswerteeinheit 16 des Sicherheitsgeräts 1, das im vorliegenden Fall ein Sicherheitssensor ist. Je nach gefordertem Sicherheitsniveau kann die Auswerteeinheit 16 von einer ein- oder mehrkanaligen Rechnerstruktur gebildet sein.

Das Ausgangsmodul 2 weist im vorliegenden Fall eine zweikanalige Struktur mit zwei Submodulen 17, 17' auf. Generell kann das Ausgangsmodul 2 auch eine einkanalige Struktur mit nur einem Submodul 17 oder eine mehrkanalige Struktur mit mehr als zwei Submodulen 17, 17'aufweisen.

Jedes Submodul 17, 17' weist einen Überwachungsbaustein 18, 18' und ein Schaltelement 19, 19' auf, wobei jeder Überwachungsbaustein 18, 18' zur Ansteuerung des jeweiligen Schaltelements 19, 19' ausgebildet ist.

Vorteilhaft ist der oder jeder Überwachungsbaustein 18, 18' ein Mikrocontroller oder eine CPU oder ein ASIC oder ein FPGA oder ein Mehrkernprozessor.

Die Schaltelemente 19, 19' können als Halbleiterschaltelemente oder elektromechanische Schaltelemente ausgebildet sein. Vorteilhaft weist das Ausgangsmodul 2 diversitäre Schaltelemente 19, 19' auf.

Jeder Überwachungsbaustein 18, 18' weist einen sicheren Eingang 20, 20'auf, der über eine Leitung 21, 21' mit der Auswerteeinheit 16 verbunden ist. Vorteilhaft weist der oder jeder Überwachungsbaustein 18, 18' einen sicheren Eingang 20, 20' auf und an das Sicherheitsgerät 1 angeschlossen.

Über die dynamische Datenschnittstelle werden bidirektional digitale, d.h. dynamische Daten übertragen.

Die Überwachungsbausteine 18, 18' sind über eine Leitung 22 verbunden, so dass zwischen den Überwachungsbausteinen 18, 18' ein bidirektionaler Datenaustausch erfolgen kann, insbesondere für eine gegenseitige Funktionsprüfung.

Die Auswerteeinheit 16 ist schließlich über Steuerleitungen 23, 23' direkt an die Schaltelemente 19, 19' angeschlossen.

Die dynamische Datenschnittstelle und die Steuerleitungen 23, 23' sind Bestandteile der Schnittstelle 3 zwischen Sicherheitsgerät 1 und Ausgangsmodul 2.

Von den Schaltelementen 19, 19' führen Ausgangsleitungen zu einer externen Einheit (in Figur 4 nicht dargestellt).

Das so ausgebildete Ausgangsmodul 2 bildet eine vom Sicherheitsgerät 1 unabhängige Einheit dahingehend, dass im Ausgangsmodul 2 eine Funktionsprüfung insbesondere der Schaltelemente 19, 19' unabhängig vom Sicherheitsgerät 1 erfolgen kann. Zudem kann im Sicherheitsgerät 1 selbsttätig eine Sicherheitsfunktion generiert werden.

Mit dem das Sicherheitsgerät 1 bildenden Sicherheitssensor, insbesondere einem Sicherheitssensor gemäß der Figuren 2 und 3, erfolgt eine Objektüberwachung in einem Überwachungsbereich. Abhängig von den Sensorsignalen der Sensorkomponenten des Sicherheitssensors, wird in der Auswerteeinheit 16 ein binäres Schaltsignal generiert, dessen Schaltzustände angeben, ob sich ein Objekt 15 im Überwachungsbereich befindet oder nicht.

Dieses Schaltsignal wird als Ausgangssignal des Sicherheitssensors von der Auswerteeinheit 16 über die sicheren Eingänge 20, 20' in die Überwachungsbausteine 18, 18' eingelesen. In den Überwachungsbausteinen 18, 18' erfolgt die Generierung einer Sicherheitsfunktion, abhängig vom Ausgangssignal des Sicherheitssensors, beispielsweise durch eine Auswertung der Ausgangssignale durch Integration, Filterung oder logische Verknüpfung. Beispielsweise kann das Schaltsignal zeitaufgelöst erfasst werden. Durch eine logische Verknüpfung des zu verschiedenen Zeitpunkten ermittelten Schaltsignals kann z.B. zur Generierung einer Sicherheitsfunktion gefordert werden, dass das Schaltsignal über einen bestimmten Zeitraum konstant bleibt. Im einfachsten Fall ist die Sicherheitsfunktion von einem Ausgangssignal selbst gebildet, nämlich dann wenn das binäre Schaltsignal den Schaltzustand "Objekt 15 vorhanden" einnimmt.

Mit der Sicherheitsfunktion kann insbesondere eine mit dem Sicherheitssensor überwachte Anlage in einen sicheren Zustand überführt werden, insbesondere stillgesetzt werden.

Die Sicherheitsfunktion wird über die Schaltelemente 19, 19' an die externe Einheit, insbesondere die Anlage ausgegeben.

Mit dem Überwachungsbaustein 18, 18' erfolgt eine Funktionsüberprüfung des jeweils angeschlossenen Schaltelements 19, 19'.

Ist das Schaltelement 19, 19' ein Halbleiterschaltelement werden zur Funktionsüberprüfung des Halbleiterschaltelements in dem Überwachungsbaustein 18, 18' Testimpulse generiert, an das Halbleiterschaltelement ausgegeben, von diesem rückgelesen und im Überwachungsbaustein 18, 18' mit einer Erwartungshaltung verglichen.

Ist das Schaltelement 19, 19' ein elektromechanisches Schaltelement werden in dem dem elektromechanischen Schaltelement zugeordneten Überwachungsbaustein 18, 18' Schaltzustände von Schaltkontakten des elektromechanischen Schaltelements überprüft.

Eine zusätzliche Funktionsüberprüfung im Sicherheitsgerät 1 kann durch ein Rücklesen von Zusatzinformationen aus den Überwachungsbausteinen 18, 18' über die dynamischen Datenschnittstellen erfolgen.

Optional kann die Auswerteeinheit 16 des Sicherheitsgeräts 1 über die Steuerleitungen 23, 23' die Schaltelemente 19, 19' des Ausgangsmoduls 2 direkt ansteuern und so eine im Sicherheitsgerät 1 generierte Sicherheitsfunktion über die Schaltelemente 19, 19' ausgeben.

### Bezugszeichenliste

- (1): Sicherheitsgerät
- (1a): Gerätegehäuse
- (2): Ausgangsmodul
- (2a): Modulgehäuse
- (3): Schnittstelle
- (4): Lichtvorhang
- (4a): Gehäuse
- (4b): Gehäuse
- (5): Lichtstrahl
- (6): Sender
- (7): Empfänger
- (8): Flächendistanzsensor
- (9): Sendelichtstrahl
- (10): Sendeelement
- (11): Empfangslichtstrahl
- (12): Empfangselement
- (13): Messkopf
- (14): Sockel
- (15): Objekt
- (16): Auswerteeinheit
- (17, 17'): Submodul
- (18, 18'): Überwachungsbaustein
- (19, 19'): Schaltelement
- (20, 20'): Eingang
- (21, 21'): Leitung
- (22): Leitung
- (23, 23'): Steuerleitung

- (D): Drehachse

## Patentansprüche

1. Anordnung mit einem Sicherheitsgerät (1), **dadurch gekennzeichnet, dass** das Sicherheitsgerät (1) Anschlussmittel zum Anschluss eines Ausgangsmoduls (2) aufweist, wobei das Ausgangsmodul (2) wenigstens ein Schaltelement (19, 19') und einen diesem zugeordneten Überwachungsbaustein (18, 18') aufweist, wobei der Überwachungsbaustein (18, 18') für eine Fehlerkontrolle des Schaltelements (19, 19') ausgebildet ist, und wobei der Überwachungsbaustein (18, 18') zur Generierung einer Sicherheitsfunktion ausgebildet ist, die über das Schaltelement (19, 19') an eine externe Einheit ausgegeben wird.

2. Anordnung nach Anspruch 1, **dadurch gekennzeichnet, dass** das Sicherheitsgerät (1) ein Sicherheitssensor ist.

3. Anordnung nach einem der Ansprüche 1 und 2, **dadurch gekennzeichnet, dass** das Ausgangsmodul (2) zum Anschluss an verschiedene Sicherheitsgeräte (1) ausgebildet ist.

4. Anordnung nach einem der Ansprüche 1 bis 3, **dadurch gekennzeichnet, dass** in dem Ausgangsmodul (2) die Sicherheitsfunktion abhängig von Ausgangssignalen des Sicherheitsgeräts (1) generiert wird.

5. Anordnung nach einem der Ansprüche 1 bis 4, **dadurch gekennzeichnet, dass** das Ausgangsmodul (2) mehrere Schaltelemente (19, 19') aufweist, welchen jeweils ein Überwachungsbaustein (18, 18') zugeordnet ist.

6. Anordnung nach Anspruch 5, **dadurch gekennzeichnet, dass** die Überwachungsbausteine (18, 18') über wenigstens eine Leitung (22) verbunden sind, über welche ein bidirektionaler Informationsaustausch erfolgt.

7. Anordnung nach einem der Ansprüche 1 bis 6, **dadurch gekennzeichnet, dass** der oder jeder Überwachungsbaustein (18, 18') ein Mikrocontroller oder eine CPU oder ein ASIC oder ein FPGA oder ein Mehrkernprozessor ist.

8. Anordnung nach einem der Ansprüche 1 bis 7, **dadurch gekennzeichnet, dass** das oder wenigstens ein Schaltelement (19, 19') als Halbleiterschaltelement ausgebildet ist.

9. Anordnung nach Anspruch 8, **dadurch gekennzeichnet, dass** zur Funktionsüberprüfung des Halbleiterschaltelements in dem Überwachungsbaustein (18, 18') Testimpulse generiert, an das Halbleiterschaltelement ausgegeben, von diesem rückgelesen und im Überwachungsbaustein (18, 18') mit einer Erwartungshaltung verglichen werden.

10. Anordnung nach einem der Ansprüche 1 bis 7, **dadurch gekennzeichnet, dass** das oder wenigstens ein Schaltelement (19, 19') als elektromechanisches Schaltelement ausgebildet ist.

11. Anordnung nach Anspruch 10, **dadurch gekennzeichnet, dass** in dem dem elektromechanischen Schaltelement zugeordneten Überwachungsbaustein (18, 18') Schaltzustände von Schaltkontakten des elektromechanischen Schaltelements überprüft werden.

12. Anordnung nach einem der Ansprüche 4 bis 11, **dadurch gekennzeichnet, dass** das Ausgangsmodul (2) diversitäre Schaltelemente (19, 19') aufweist.

13. Anordnung nach einem der Ansprüche 1 bis 12, **dadurch gekennzeichnet, dass** der oder jeder Überwachungsbaustein (18, 18') einen sicheren Eingang (20, 20') aufweist, der an das Sicherheitsgerät (1) angeschlossen ist.

14. Anordnung nach Anspruch 13, **dadurch gekennzeichnet, dass** der oder jeder sichere Eingang (20, 20') von einer Auswerteeinheit (16) des Sicherheitsgeräts (1) dynamisch angesteuert wird.

15. Anordnung nach Anspruch 14, **dadurch gekennzeichnet, dass** der oder jeder sichere Eingang (20, 20') Bestandteil einer dynamischen Datenschnittstelle ist.

16. Anordnung nach einem der Ansprüche 13 bis 15, **dadurch gekennzeichnet, dass** über den sicheren Eingang (20, 20') ein Ausgangssignal vom Sicherheitsgerät (1) in das Ausgangsmodul (2) eingelesen wird, welches den Zustand des oder jedes Schaltelements (19, 19') bestimmt.

17. Anordnung nach einem der Ansprüche 14 bis 16, **dadurch gekennzeichnet, dass** die Auswerteeinheit (16) des Sicherheitsgeräts (1) über eine Steuerleitung (23, 23') mit dem oder jedem Schaltelement (19, 19') verbunden ist.

18. Auswerteeinheit (16) nach Anspruch 17, **dadurch gekennzeichnet, dass** über eine Steuerleitung (23, 23') ein Schaltelement (19, 19') direkt von der Auswerteeinheit (16) ansteuerbar ist.

19. Anordnung nach einem der Ansprüche 1 bis 18, **dadurch gekennzeichnet, dass** Zustandsinformationen des Ausgangsmoduls (2) in das Sicherheitsgerät (1) rückgelesen werden.

20. Anordnung nach Anspruch 15 und 19, **dadurch gekennzeichnet, dass** das Rücklesen über die dynamische Datenschnittstelle erfolgt.

21. Anordnung nach einem der Ansprüche 1 bis 20, **dadurch gekennzeichnet, dass** die Komponenten des Sicherheitsgeräts (1) in einem Gerätegehäuse (1a) integriert sind, und dass die Komponenten des Ausgangsmoduls (2) in einem Modulgehäuse (2a) integriert sind.

22. Verfahren zum Betrieb einer Anordnung mit einem Sicherheitsgerät (1), **dadurch gekennzeichnet, dass** das Sicherheitsgerät (1) Anschlussmittel zum Anschluss eines Ausgangsmoduls (2) aufweist, wobei das Ausgangsmodul (2) wenigstens ein Schaltelement (19, 19') und einen diesem zugeordneten Überwachungsbaustein (18, 18') aufweist, wobei der Überwachungsbaustein (18, 18') für eine Fehlerkontrolle des Schaltelements (19, 19') ausgebildet ist, und wobei der Überwachungsbaustein (18, 18') zur Generierung einer Sicherheitsfunktion ausgebildet ist, die über das Schaltelement (19, 19') an eine externe Einheit ausgegeben wird.
